# EUROPEAN PATENT APPLICATION

(11) **EP 2 785 060 A1**
(43) Date of publication of application: **01.10.2014**
(21) Application number: 14156819.6
(22) Date of filing: 26.02.2014
(51) Int. Cl.: H04N 9/31, G02B 27/09, G03B 21/20

(54) **Projection device and head-up display device**

(30) Priority: 29.03.2013 JP 2013071120
(71) Applicant: Funai Electric Co., Ltd., Daito city Osaka 574-0013 (JP)
(72) Inventor: Toyoda, Takashi, Osaka, Osaka 574-0013 (JP)
(74) Representative: Osha Liang SARL

(57) **Abstract**

A projection device (1) comprises a laser light generator (18a, 18b, 18c) that outputs a laser light based on input image signals, a projector (21) comprising a scanner (21a) that scans the laser light irradiated from the laser light generator (18a, 18b, 18c) and projects an image on a projection area, a neutral density filter (20) that coarsely adjusts brightness of the projected image by incrementally changing transmittance of the laser light irradiated from the laser light generator (18a, 18b, 18c), and a laser output controller (12) that finely adjusts brightness of the projected image by changing light intensity of the laser light by performing output adjustment of the laser light irradiated from the laser light generator (18a, 18b, 18c).

## Description

### [Technical Field]

The present invention relates generally to a projection device, such as for example a head-up display device ("HUD"), and particularly relates to a projection device comprising a neutral density filter.

### [Background Technology]

Conventionally, a projection device equipped with a neutral density filter is known (for example, see Patent Reference 1).

Patent Reference 1 discloses a projection device equipped with a light source lamp that generates illumination light, and a neutral density filter comprising a gradation section that continuously changes transmittance of the illumination light irradiated from the light source lamp.

[Patent Reference 1] Japanese Unexamined Patent Application Publication No. 2008-225440

In the projection device described in the above Patent Reference 1, because the neutral density filter is configured to continuously change transmittance of the illumination light irradiated from the light source lamp by the gradation section, the neutral density filter has a disadvantage in that the size of the neutral density filter becomes large, inasmuch as the gradation section comprises sections having various sizes of transmittance. Thus, avoiding that the size of the projection device increases is difficult.

### [Summary of the Invention]

One or more embodiments of the present invention are directed to a projection device, such as for example a head-up display device, that can suppress an increase in size.

A projection device according to one or more embodiments may comprise a laser light generator that outputs a laser light based on input image signals; a projector comprising a scanner that scans the laser light irradiated from the laser light generator and projects an image on a projection area; a neutral density filter that coarsely adjusts brightness of the projected image by incrementally changing transmittance of the laser light irradiated from the laser light generator; and a laser output controller that finely adjusts brightness of the projected image by changing light intensity of the laser light by performing output adjustment of the laser light irradiated from the laser light generator.

As a result, in one or more embodiments, by providing the neutral density filter that coarsely adjusts brightness of the projected image by incrementally changing transmittance of the laser light irradiated from the laser light generator, the neutral density filter can be decreased in size in proportion to the decrease in the number of sections having a different transmittance compared to when gradation sections continuously change transmittance is included. By this, the projection device can be suppressed from increasing in size. Moreover, the brightness of the image can be changed smoothly because the brightness of the image coarsely adjusted by the neutral density filter can be finely adjusted by the laser controller, which finely adjusts the brightness of the projected image by changing the light intensity of the laser light by performing output adjustment of the laser light irradiated from the laser light generator.
According to one or more embodiments, the laser output controller may finely adjust the brightness of the image at a same time the neutral density filter coarsely adjusts the brightness of the image.
According to one or more embodiments, the neutral density filter may be configured to change the transmittance of the laser light by a predetermined number of increments.
According to one or more embodiments, the laser output controller may be configured to change the light intensity of the laser light in a predetermined range, for example in a range of 1 to 1/α.

As another example, in one or more embodiments, the laser output controller may be configured to finely adjust the light intensity of the laser light down to 1/α, and the neutral density filter may be configured to incrementally change transmittance 1/α times at a time. The brightness of the image may be configured to be finely adjusted by the laser controller while the neutral density filter unit coarsely adjusts the brightness of the image incrementally. By being configured in this manner, the brightness of the image can be adjusted while being smoothly changed in a wide range by combining the fine adjustment of the laser controller and the coarse adjustment of the neutral density filter that changes transmittance 1/α times at a time.

As another example, in one or more embodiments, the neutral density filter may comprise a first neutral density filter; and a second neutral density filter disposed in an optical path direction of the laser light relative to the first neutral density filter, wherein transmittance is configured to change incrementally by combining the first neutral density filter and the second neutral density filter.

In one or more embodiments, when the neutral density filter comprises a first neutral density filter and a second neutral density filter, the first neutral density filter may have incremental transmittance and may comprise a plurality of filters arranged in a direction that intersects the optical path direction of the laser light, the second neutral density filter may have incremental transmittance and may comprise a plurality of filters arranged in the direction that intersects the optical path direction of the laser light, and the neutral density filter may further comprise a driver that moves the first neutral density filter and the second neutral density filter in the direction that intersects the optical path direction of the laser light to change a combination of the plurality of filters of the first neutral density filter and the plurality of filters of the second neutral density filter. By being configured in this manner, the direction that intersects the optical path direction of the laser light of the neutral density filter can be made smaller in size because transmittances at various increments can be realized by superimposing the plurality of neutral density filters, compared to when realizing all transmittances by one neutral density filter. Moreover, transmittance of the neutral density filter can be changed easily because a driver can change the combination of the plurality of filters of the first neutral density filter and the plurality of filters of the second neutral density filter.

In one or more embodiments, the first neutral density filter may comprise a plurality of types of filters with transmittance expressed by an integer power of 1/α, the second neutral density filter may comprise a plurality of types of filters with transmittance expressed by an integer power of 1/α, and the neutral density filter is configured to change transmittance incrementally 1/α times at a time in (N+1) increments from 1 to the Nth power of 1/α, by combining the plurality of filters of the first neutral density filter and the plurality of filters of the second neutral density filter. By being configured in this manner, transmittance can be changed easily and incrementally in (N+1) increments from 1 to the Nth power of 1/α, 1/α times at a time by combining the plurality of types of filters of the first neutral density filter and the plurality of types of filters of the second neutral density filter.

In one or more embodiments, the neutral density filter may be configured to change transmittance incrementally in increments of between five and seven from 1 to 1/1000 or less by combining one of the plurality of filters of the first neutral density filter and one of the plurality of filters of the second neutral density filter. By being configured in this manner, the brightness of the image can be adjusted smoothly in a wide range easily by combining the fine adjustment of the laser controller because the brightness of the image can be coarsely adjusted incrementally in five or more increments and seven or fewer increments from a range of 1 to 1/1000 or less.

As another example, according to one or more embodiments, the projection device may comprise a head-up display device.

A projection device size control method, according to one or more embodiments, may comprise outputting laser light based on input image signals; scanning the laser light and projecting an image on a projection area; coarsely adjusting brightness of the projected image by incrementally changing transmittance of the laser light; and finely adjusting brightness of the projected image by changing light intensity of the laser light by performing output adjustment of the laser light.

As another example, in one or more embodiments, by providing the neutral density filter that coarsely adjusts brightness of the projected image by incrementally changing transmittance of the laser light irradiated from the laser light generator, the neutral density filter can be decreased in size in proportion to the decrease in the number of sections having a different transmittance compared to when gradation sections continuously change transmittance is included. By this, the head-up display device can be suppressed from increasing in size. Such an effect is particularly effective in a head-up display device for which a decrease in size is desirable. Moreover, the brightness of the image can be changed smoothly because the brightness of the image coarsely adjusted by the neutral density filter can be finely adjusted by the laser controller by providing the laser controller that finely adjusts the brightness of the projected image by changing the light intensity of the laser light by performing output adjustment of the laser light irradiated from the laser light generator.

One or more embodiments, as described above, can suppress the projection device and head-up display device from increasing in size.

### [Brief Description of the Drawings]

FIG. 1 is a block diagram illustrating a configuration of a head-up display device according to one or more embodiments of the present invention.
FIG. 2 is a diagram illustrating a configuration of the neutral density filter of the head-up display device according to one or more embodiments of the present invention.
FIG. 3 is a diagram for describing adjustments of brightness of the head-up display device according one or more embodiments of the present invention.
FIG. 4 is a diagram for describing movements of the neutral density filter of the head-up display device according to one or more embodiments of the present invention.
FIG. 5 is a diagram illustrating a configuration of a neutral density filter of a head-up display device according to a first modified example of one or more embodiments of the present invention.
FIG. 6 is a diagram illustrating a configuration of a neutral density filter of a head-up display device according to a second modified example of one or more embodiments of the present invention.
FIG. 7 is a diagram illustrating a configuration of a neutral density filter of a head-up display device according to one or more embodiments of the present invention.
FIG. 8 is a diagram illustrating a configuration of a neutral density filter of a head-up display device according to a modified example of one or more embodiments of the present invention.
FIG. 9 is a diagram illustrating a configuration of a neutral density filter of a head-up display device according to one or more embodiments of the present invention.
FIG. 10 is a diagram illustrating a configuration of a neutral density filter of a head-up display device according to a modified example of one or more embodiments of the present invention.

### [Detailed Description of Embodiments]

One or more embodiments of the present invention are described below with reference to the drawings.

### (First Example)

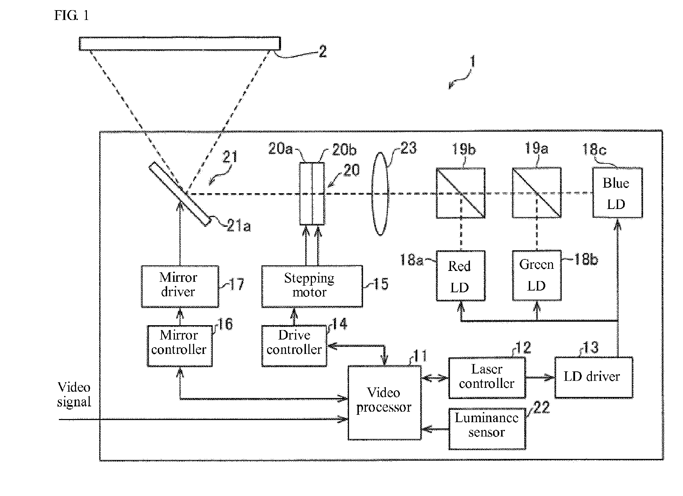

One or more embodiments of a head-up display device 1 according to a first example will be described with reference to FIGS. 1 to 4.

The head-up display device 1 according to one or more embodiments, as illustrated in FIG. 1, is configured to project an image against a projection area such as a windshield 2 of a vehicle (not illustrated). The windshield 2 is disposed in a view direction of a user operating the vehicle. The head-up display device 1 is one example of a "projection device" of the present invention, and the windshield 2 is one example of a "display panel" of the present invention.

Furthermore, the head-up display device 1, as illustrated in FIG. 1, may comprise a video processor 11, a laser controller 12, an LD (laser diode) driver 13, a drive controller 14, a stepping motor 15, a mirror controller 16, a mirror driver 17, a red LD 18a, a greed LD 18b, a blue LD 18c, and two polarized beam splitters 19a and 19b. The laser controller 12 is one example of a "laser output controller" of the present invention; that the stepping motor 15 is one example of a "driver" of the present invention; and that the red LD 18a, the green LD 18b, and the blue LD 18c together are one example of a "laser light generator" of the present invention.

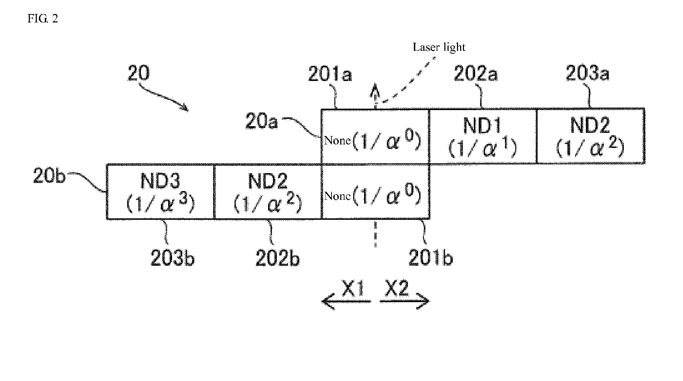

Furthermore, according to one or more embodiments of the first example, the head-up display device 1 comprises a neutral density filter 20, a projector 21, an ambient light sensor 22, and an optical lens 23. The neutral density filter 20 comprises a first neutral density filter 20a and a second neutral density filter 20b disposed in an optical path direction of a laser light relative to the first neutral density filter 20a. Moreover, as illustrated in FIG. 2, the first neutral density filter 20a comprises a plurality of filters 201a, 202a, and 203a arranged in a direction that intersects the optical path direction of the laser light. Moreover, the second neutral density filter 20b comprises a plurality of filters 201b, 202b, and 203b arranged in a direction that intersects the optical path direction of the laser light. As illustrated in FIG. 1, the projector 21 comprises a MEMS mirror 21a. The MEMS mirror 21a is one example of a "scanner" of the present invention.

The video processor 11 is configured to control projection of video based on video signals input from external equipment such as a car navigation device. The video processor 11 is configured to control irradiation of the laser light by the red LD 18a, the green LD 18b, and the blue LD 18c via the laser controller 12 based on video signals input from outside, and to control driving of the MEMS mirror 21a via the mirror controller 16.

Furthermore, the video processor 11 is configured to adjust a brightness of a projected image based on an external brightness detected by the ambient light sensor 22. The video processor 11 is configured to perform output adjustment of the laser light irradiated from the red LD 18a, the green LD 18b, and the blue LD 18c via the laser controller 12, and to adjust transmittance of the laser light of the neutral density filter 20 via the drive controller 14.

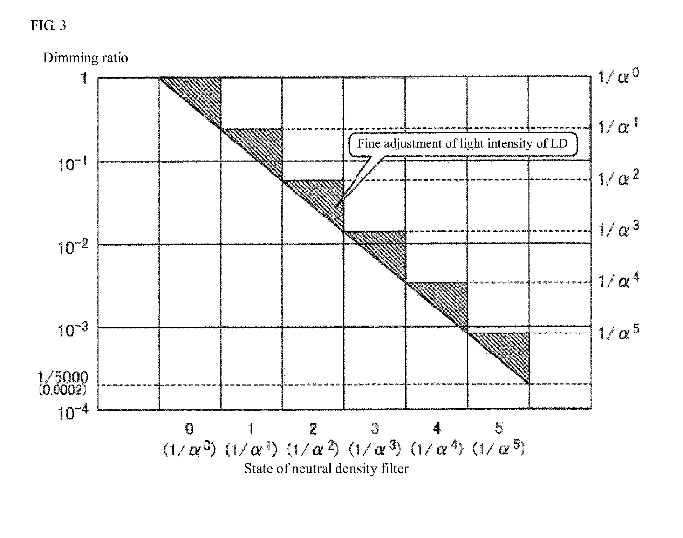

The head-up display device 1, as illustrated in FIG. 3, is configured to enable adjustment of the brightness of the projected image, for example, from a dimming ratio (a ratio from a maximum value of the brightness of an image) of 1 to 1/5000. The brightness of the image is adjusted to become brighter by increasing the dimming ratio (approaching 1) when there is a high (bright) outside luminance, at daytime and the like. By this, the projected image can be seen vividly even when the outside is bright. Moreover, the brightness of the image is adjusted to become darker by decreasing the dimming ratio (approaching 1/5000) when there is low (dark) outside luminance, at nighttime and the like. By this, the projected image can be prevented from becoming excessively bright compared to the surroundings when the outside is dark.

The laser controller 12 is configured to control irradiation of the laser light by the red LD 18a, the green LD 18b, and the blue LD 18c by controlling the LD driver 13 based on controls by the video processor 11. The laser controller 12 is configured to control a laser light of a color corresponding to each pixel of the image to irradiate from the red LD 18a, the green LD 18b, and the blue LD 18c, to match the scanning timing of the MEMS mirror 21a.

Furthermore, the laser controller 12 is configured to adjust output of the laser light irradiated from the red LD 18a, the green LD 18b, and the blue LD 18c by controlling the LD driver 13. The laser controller 12 is configured to adjust output of the laser light in a range of 1 to 1/α (for example, α is about 4.14). In other words, the laser controller 12 is configured to finely adjust the brightness of the projected image by finely adjusting the light intensity of the laser light down to 1/ α times.

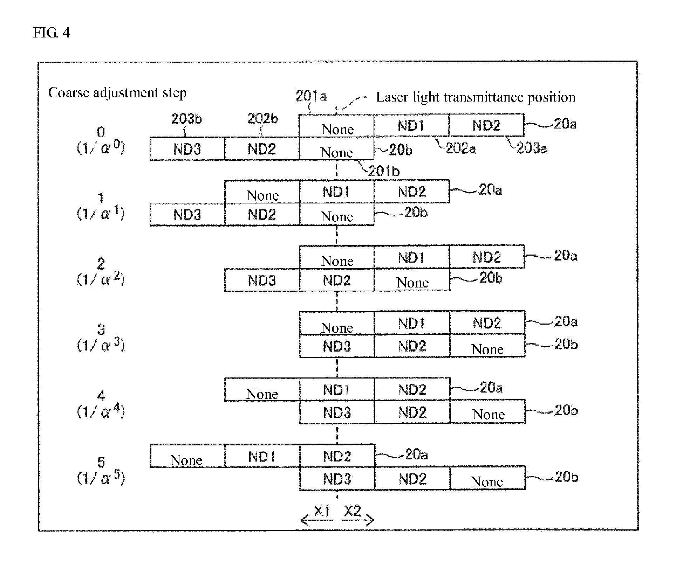

The drive controller 14 is configured to change transmittance of the laser light of the neutral density filter 20 by controlling the stepping motor 15 based on controls by the video processor 11. The drive controller 14 is configured to move respectively, by the stepping motor 15, the first neutral density filter 20a and the second neutral density filter 20b of the neutral density filter 20 in the direction that intersects the optical path direction of the laser light. By this, as illustrated in FIG. 4, transmittance of the laser light of the neutral density filter 20 changes because a combination of the filters 201a to 203a of the first neutral density filter 20a and the filters 201b to 203b of the second neutral density filter 20b is modified.

The mirror controller 16 is configured to control driving of the MEMS mirror 21a by controlling the mirror driver 17 based on controls by the video processor 11.

The red LD 18a is configured to irradiate a red laser light to the MEMS mirror 21a by passing through the polarized beam splitter 19b, the optical lens 23, and the neutral density filter 20. The green LD 18b is configured to irradiate a green laser light to the MEMS mirror 21a by passing through the polarized beam splitters 19a and 19b, the optical lens 23, and the neutral density filter 20. The blue LD 18c is configured to irradiate a blue laser light to the MEMS mirror 21a by passing through the polarized beam splitters 19a and 19b, the optical lens 23, and the neutral density filter 20.

Here, in one or more embodiments of the first example, the neutral density filter 20 is configured to coarsely adjust brightness of the projected image by incrementally changing transmittance of the laser light irradiated from the red LD 18a, the green LD 18b, and the blue LD 18c. The neutral density filter 20 is configured to incrementally change transmittance 1/α times at a time. In detail, as illustrated in FIG. 3, the neutral density filter 20 is configured to coarsely adjust transmittance (dimming ratio) in six increments of 1/α⁰ (=1), 1/α¹, 1/α², 1/α³, 1/α⁴, and 1/α⁵. Moreover, the neutral density filter 20 is configured to change transmittance incrementally in six increments from 1 to 1/1200 by combining the filters 201a to 203a of the first neutral density filter 20a and the filters 201b to 203b of the second neutral density filter 20b. The dimming ratio (vertical axis) of FIG. 3 is expressed by logarithmic expressions with a base of 10.

Furthermore, the laser controller 12 finely adjusts the brightness of the image while the neutral density filter 20 coarsely adjusts the brightness of the image incrementally. In other words, the dimming ratio is adjusted in a range, for example, of 1 to 1/5000, by making transmittance of the neutral density filter 20 any of states 1/α⁰, 1/α¹, 1/α², 1/α³, 1/α⁴, or 1/α⁵ and finely adjusting luminance (output) of each LD by the laser controller 12 in a range from 1 to 1/ α.

Here, a value of α can be determined by a minimum value Rm of the dimming ratio and a coarsely adjusted incremental number S. Rm is (1/α) to the power of S. For example, when the minimum value Rm of the dimming ratio is 1/5000 and the coarsely adjusted incremental number S is 6, α is about 4.14. Further, α may be set from a range in which laser light output can be stably controlled. In this case, the coarsely adjusted incremental number S can be chosen from the minimum value Rm of the dimming ratio and α.

Furthermore, in one or more embodiments of the first example, as illustrated in FIG. 2, the filters 20 1 a to 203a of the first neutral density filters 20a and the filters 201 b to 203b of the second neutral density filter 20b have respectively a transmittance expressed by an integer power of 1/α. The filters 201a to 203a of the first neutral density filter 20a have respectively a transmittance of 1/α⁰ (none), 1/α¹ (ND1), and 1/α² (ND2). Moreover, the filters 201b to 203b of the second neutral density filter 20b have respectively a transmittance of 1/α⁰ (none), 1/α² (ND2), and 1/α³ (ND3). The filter 201a and the filter 201b are either made from a material with a transmittance of 1 or are in a state of not having the material (in an empty state).

Furthermore, a transmittance of the filter 203a having the smallest transmittance among the filters of the first neutral density filter 20a and a transmittance of the filter 203b having the smallest transmittance among the filters of the second neutral density filter 20b may be either the same or one is 1/α times the other.

Furthermore, the neutral density filter 20 is configured to change transmittance incrementally by combining the filters 201a to 203a of the first neutral density filter 20a and the filters 201b to 203b of the second neutral density filter 20b. The neutral density filter 20 is configured to change transmittance incrementally in six increments from 1 to the fifth power of 1/α 1/α times at a time by combining the plurality of filters 201a to 203a and the plurality of filters 201b to 203b.

For example, as illustrated in FIG. 4, for coarse adjustment step 0 (1/α⁰ transmittance), the filter 201a of the first neutral density filter 20a (1/α⁰ transmittance) and the filter 201b of the second neutral density filter 20b (1/α⁰ transmittance) are combined. Moreover, for coarse adjustment step 1 (1/α¹ transmittance), the filter 202a (1/α¹ transmittance) of the first neutral density filter 20a and the filter 201b (1/α⁰ transmittance) of the second neutral density filter 20b are combined. In other words, when migrating from coarse adjustment step 0 to coarse adjustment step 1, the first neutral density filter 20a is moved the width of one filter in an X1 direction by the stepping motor 15.

For coarse adjustment step 2 (1/α²transmittance), the filter 201a (1/α⁰transmittance) of the first neutral density filter 20a and the filter 202b (1/α² transmittance) of the second neutral density filter 20b are combined. In other words, when migrating from coarse adjustment step 1 to coarse adjustment step 2, the first neutral density filter 20a is moved the width of one filter in an X2 direction by the stepping motor 15, and the second neutral density filter 20b is moved the width of one filter in the X2 direction by the stepping motor 15.

For coarse adjustment step 3 (1/α³ transmittance), the filter 201a (1/α⁰ transmittance) of the first neutral density filter 20a and the filter 203b (1/α³ transmittance) of the second neutral density filter 20b are combined. In other words, when migrating from coarse adjustment step 2 to coarse adjustment step 3, the second neutral density filter 20b is moved the width of one filter in the X2 direction by the stepping motor 15.

For coarse adjustment step 4 (1/α⁴ transmittance), the filter 202a (1/α¹ transmittance) of the first neutral density filter 20a and the filter 203b (1/α³ transmittance) of the second neutral density filter 20b are combined. In other words, when migrating from coarse adjustment step 3 to coarse adjustment step 4, the first neutral density filter 20a is moved the width of one filter in the X1 direction by the stepping motor 15.

For coarse adjustment step 5 (1/α⁵ transmittance), the filter 203a (1/α² transmittance) of the first neutral density filter 20a and the filter 203b (1/α³ transmittance) of the second neutral density filter 20b are combined. In other words, when migrating from coarse adjustment step 4 to coarse adjustment step 5, the first neutral density filter 20a is moved the width of one filter in the X1 direction by the stepping motor 15.

In coarse adjustment steps 2 to 4, a combination of the first neutral density filter 20a and the second neutral density filter 20b may be another combination. For example, for coarse adjustment step 3 (1/α³ transmittance), the filter 202a (1/α¹ transmittance) of the first neutral density filter 20a and the second neutral density filter 202b (1/α² transmittance) of the filter 20b may be combined.

As described above, the dimming ratio is coarsely adjusted by the neutral density filter 20 while migrating coarse adjustment steps. Moreover, the brightness of the image can be changed continuously (without suddenly brightening or darkening) because a coarse adjustment step can be migrated to an adjacent coarse adjustment step by moving the first neutral density filter 20a and the second neutral density filter 20b within the width of one filter.

The video projector 21 is configured to project images on the windshield 2. The MEMS mirror 21a of the video projector 21 is configured to scan a laser light irradiated from the red LD 18a, the green LD 18b, and the blue LD 18c and project images on the windshield 2. The MEMS mirror 21a is configured to operate on two axes, in a horizontal direction and in a vertical direction, and scan a laser light. Moreover, the MEMS mirror 21a is configured to scan the horizontal direction at a high speed by a resonant drive and to scan the vertical direction at a low speed by a direct current drive.

In one or more embodiments of the first example, the neutral density filter 20 can be decreased in size inasmuch as a number of sections having a different transmittance compared to when gradation sections to continuously change transmittance is included is decreased, by providing the neutral density filter 20 that coarsely adjusts brightness of the projected image by incrementally changing transmittance of the laser light irradiated from the red LD 18a, the green LD 18b, and the blue LD 18c. By this, the head-up display device 1 can be suppressed from increasing in size. Moreover, the brightness of the image can be changed smoothly because the brightness of the image coarsely adjusted by the neutral density filter 20 can be finely adjusted by the laser controller 12 by providing the laser controller 12 that finely adjusts the brightness of the projected image by changing the light intensity of the laser light by performing output adjustment of the laser light irradiated from the red LD 18a, the green LD 18b, and the blue LD 18c.

Furthermore, in one or more embodiments of the first example, the laser controller 12 is configured to finely adjust the light intensity of the laser light down to 1/α times, and the neutral density filter 20 is configured to incrementally change transmittance 1/α times at a time. Moreover, the brightness of the image is configured to be finely adjusted by the laser controller 12 while the neutral density filter 20 coarsely adjusts the brightness of the image incrementally. By this, the brightness of the image can be adjusted while being smoothly changed in a wide range by combining the fine adjustment of the laser controller 12 and the coarse adjustment of the neutral density filter 20 that changes transmittance 1/α times at a time.

Furthermore, in one or more embodiments of the first example, transmittance is configured to change incrementally by combining the filters 201a to 203a of the first neutral density filter 20a and the filters 201 b to 203b of the second neutral density filter 20b. By this, the neutral density filter 20 can easily be made to a desired transmittance by combining the filters 201a to 203a of the first neutral density filter 20a and the filters 201b to 203b of the second neutral density filter 20b.

Furthermore, in one or more embodiments of the first example, the plurality of filters 201a to 203 a having incremental transmittance and arranged in the direction that intersects the optical path direction of the laser light and the plurality of filters 201b to 203b having incremental transmittance and arranged in the direction that intersects the optical path direction of the laser light are provided. Furthermore, the stepping motor 15 that moves the first neutral density filter 20a and the second neutral density filter 20b in the direction that intersects the optical path direction of the laser light to change the combination of the plurality of filters 201a to 203a and the plurality of filters 201b to 203b is provided. By this, the direction that intersects the optical path direction of the laser light of the neutral density filter 20 can be made smaller in size because transmittances at various increments can be realized by superimposing the plurality of neutral density filters, compared to when realizing all transmittances by one neutral density filter. Moreover, transmittance of the neutral density filter 20 can be changed easily because the stepping motor 15 can change the combination of the plurality of filters 201a to 203a and the plurality of filters 201b to 203b.

Furthermore, in one or more embodiments of the first example, a plurality of types of filters 201a to 203a with a transmittance expressed by an integer power of 1/α and a plurality of types of filters 201b to 203b with a transmittance expressed by an integer power of 1/α are provided. Moreover, the neutral density filter 20 is configured to change transmittance incrementally in six increments from 1 to the fifth power of 1/α 1/α times at a time by combining the plurality of filters 201a to 203a and the plurality of filters 201b to 201c. By this, transmittance can be changed easily and incrementally in six increments from 1 to the fifth power of 1/α 1/α times at a time by combining the plurality of types of filters 201a to 203a and the plurality of types of filters 201b to 203b.

Furthermore, in one or more embodiments of the first example, the neutral density filter 20 is configured to change transmittance incrementally in six increments from 1 to 1/1200 by combining the filters 201a to 203a of the first neutral density filter 20a and the filters 201b to 203b of the second neutral density filter 20b. By this, the brightness of the image can be adjusted smoothly in a wide range easily by combining the fine adjustment of the laser controller 12 because the brightness of the image can be coarsely adjusted incrementally in six increments in a range from 1 to about 1/1200.

### (First Modification of the First Example)

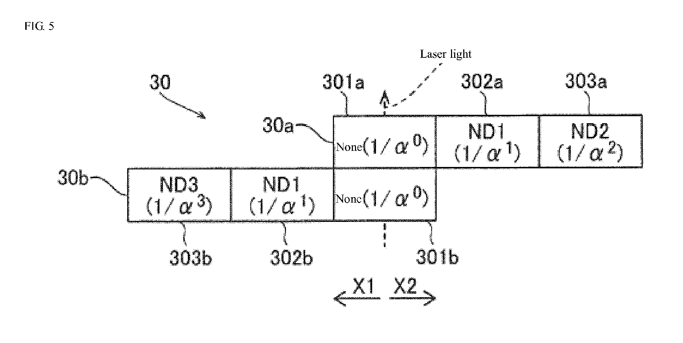

A first modification of the previously described one or more embodiments of the first example is described below. As illustrated in FIG. 5, a first neutral density filter and a second neutral density filter are configured.

In the first modification of the previously described one or more embodiments of the first example, a neutral density filter 30 is configured to coarsely adjust transmittance (dimming ratio) in six increments of 1/α⁰ (=1), 1/α¹, 1/α², 1/α³, 1/α⁴, and 1/α⁵. Furthermore, as illustrated in FIG. 5, filters 301a to 303a of the first neutral density filter 30a and filters 301b to 303b of the second neutral density filter 30b have respectively a transmittance expressed by an integer power of 1/α. The filters 301a to 303a of the first neutral density filter 30a have respectively a transmittance of 1/α⁰ (none), 1/α¹ (ND1), and 1/α² (ND2). Furthermore, the filters 301b to 303b of the second neutral density filter 30b have respectively a transmittance of 1/α⁰ (none), 1/α¹ (ND1), and 1/α³ (ND3). The filter 301a and the filter 301b are either made from a material with a transmittance of 1 or are in a state of not having the material (in an empty state).

Other configurations of the first modification of the previously described one or more embodiments of the first example may be the same as the previously described one or more embodiments of the first example.

### (Second Modification of the First Example)

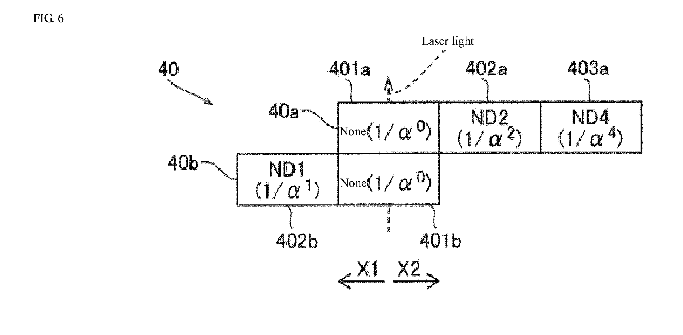

A second modification of the previously described one or more embodiments of the first example is described below. As illustrated in FIG. 6, a first neutral density filter and a second neutral density filter are configured.

In the second modification of the previously described one or more embodiments of the first example, a neutral density filter 40 is configured to coarsely adjust transmittance (dimming ratio) in six increments of 1/α⁰ (=1), 1/α¹, 1/α², 1/α³, 1/α⁴, and 1/α⁵. Furthermore, as illustrated in FIG. 6, filters 401a to 403a of the first neutral density filter 40a and filters 401b and 402b of the second neutral density filter 40b have respectively a transmittance expressed by an integer power of 1/α. The filters 401a to 403a of the first neutral density filter 40a have respectively a transmittance of 1/α⁰ (none), 1/α² (ND2), and 1/α⁴ (ND4). Furthermore, the filters 401b and 402b of the second neutral density filter 40b have respectively a transmittance of 1/α⁰ (none) and 1/α¹ (ND1). The filter 401a and the filter 401b are either made from a material with a transmittance of 1 or are in a state of not having the material (in an empty state).

Other configurations of the second modification of the previously described one or more embodiments of the first example may be the same as the previously described one or more embodiments of the first example.

### (Second Example)

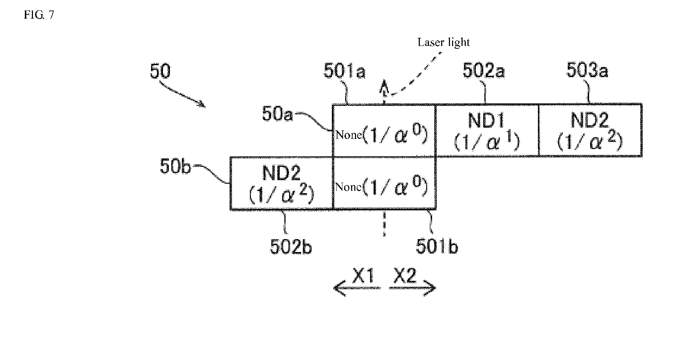

Next, one or more embodiments of a second example of the present invention will be described with reference to FIG. 7. Unlike the first example configured to perform coarse adjustment in six increments by the neutral density filter, the second example may be configured to perform coarse adjustment in five increments by a neutral density filter.

Here, in one or more embodiments of a second example, a neutral density filter 50 is configured to coarsely adjust transmittance (dimming ratio) in five increments of 1/α⁰ (=1), 1/α¹, 1/α², 1/α³, and 1/α⁴. Furthermore, as illustrated in FIG. 7, filters 501a to 503a of the first neutral density filter 50a and filters 501b and 502b of the second neutral density filter 50b have respectively a transmittance expressed by an integer power of 1/α. The filters 501a to 503a of the first neutral density filter 50a have respectively a transmittance of 1/α⁰ (none), 1/α¹ (ND1), and 1/α² (ND2). Furthermore, the filters 501b and 502b of the second neutral density filter 50b have respectively a transmittance of 1/α⁰ (none) and 1/α² (ND2). The filter 501a and the filter 501b are either made from a material with a transmittance of 1 or are in a state of not having the material (in an empty state). Furthermore, for example, when the minimum value Rm of the dimming ratio is 1/5000 and the coarsely adjusted incremental number S is 5, α is about 5.49.

Other configurations of one or more embodiments of a second example may be the same as the previously described one or more embodiments of the first example.

As described above, in one or more embodiments of a second example, the head-up display device 1 can also be suppressed from increasing size by providing the neutral density filter 50 that coarsely adjusts brightness of the projected image by incrementally changing transmittance of a laser light irradiated from a red LD 18a, a green LD 18b, and a green LD 18c.

Other effects of one or more embodiments of the second example may be the same as the previously described one or more embodiments of the first example.

### (First Modification of the Second Example)

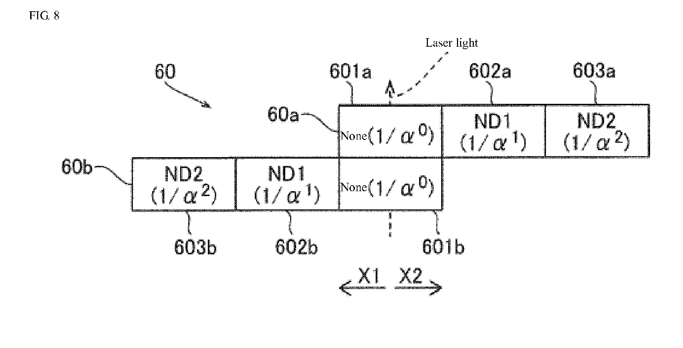

A first modification of one or more embodiments of the second example is described below. As illustrated in FIG. 8, a first neutral density filter and a second neutral density filter are configured.

In the first modification of one or more embodiments of the second example, a neutral density filter 60 is configured to coarsely adjust transmittance (dimming ratio) in five increments of 1/α⁰ (=1), 1/α¹, 1/α², 1/α³, and 1/α⁴. Furthermore, as illustrated in FIG. 8, filters 601a to 603a of the first neutral density filter 60a and filters 601b to 603b of the second neutral density filter 60b have respectively a transmittance expressed by an integer power of 1/α. The filters 601a to 603a of the first neutral density filter 60a have respectively a transmittance of 1/α⁰ (none), 1/α¹ (ND1), and 1/α² (ND2). Furthermore, the filters 601b to 603b of the second neutral density filter 60b have respectively a transmittance of 1/α⁰ (none), 1/α¹ (ND1), and 1/α² (ND2). The filter 601a and the filter 601b are either made from a material with a transmittance of 1 or are in a state of not having the material (in an empty state).

Other configurations of the first modification of one or more embodiments of the second example may be the same as the previously described one or more embodiments of the second example.

### (Third Example)

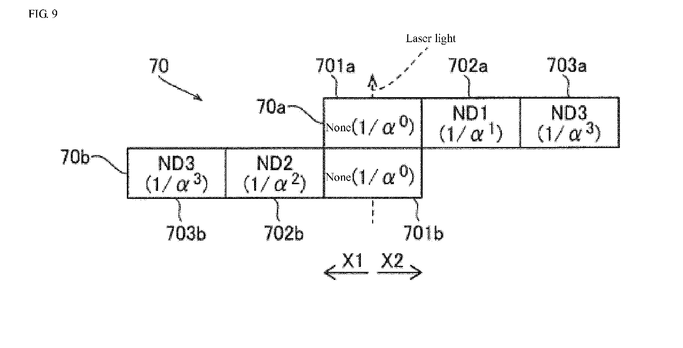

Next, one or more embodiments of a third example of the present invention will be described with reference to FIG. 9. Unlike the first example configured to perform coarse adjustment in six increments by the neutral density filter and unlike the second example configured to perform coarse adjustment in five increments by the neutral density filter, the third example may be configured to perform coarse adjustment in seven increments by a neutral density filter.

Here, in one or more embodiments of a third example, a neutral density filter 70 is configured to coarsely adjust transmittance (dimming ratio) in seven increments of 1/α⁰ (=1), 1/α¹, 1/α², 1/α³, 1/α⁴, 1/α⁵, and 1/α⁶. Furthermore, as illustrated in FIG. 9, filters 701 a to 703a of the first neutral density filter 70a and filters 701b to 703b of the second neutral density filter 70b have respectively a transmittance expressed by an integer power of 1/α. The filters 701a to 703a of the first neutral density filter 70a have respectively a transmittance of 1/α⁰ (none), 1/α¹ (ND1), and 1/α³ (ND3). Furthermore, the filters 701b to 703b of the second neutral density filter 70b have respectively a transmittance of 1/α⁰ (none), 1/α² (ND2), and 1/α³ (ND3). The filter 701a and the filter 701b are either made from a material with a transmittance of 1 or are in a state of not having the material (in an empty state). Furthermore, for example, when the minimum value Rm of the dimming ratio is 1/5000 and the coarsely adjusted incremental number S is 7, α is about 3.38.

Other configurations of one or more embodiments of a third example may be the same as the previously described one or more embodiments of the first example.

As described above, in one or more embodiments of a third example, the head-up display device 1 can also be suppressed from increasing size by providing the neutral density filter 70 that coarsely adjusts brightness of the projected image by incrementally changing transmittance of a laser light irradiated from a red LD 18a, a green LD 18b, and a green LD 18c.

Other effects of one or more embodiments of a third example may be the same as the previously described one or more embodiments of the first example.

### (First Modification of the Third Example)

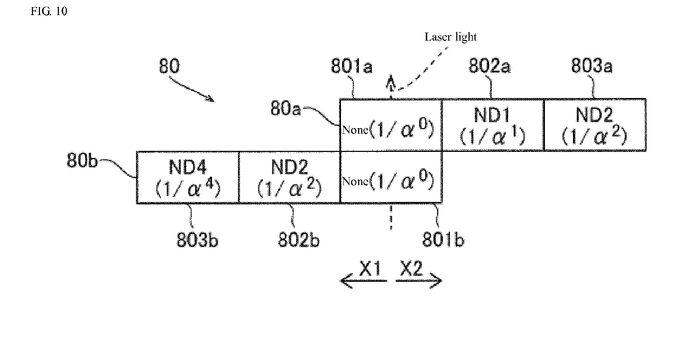

A first modification of one or more embodiments of the third example is described below. As illustrated in FIG. 10, a first neutral density filter and a second neutral density filter are configured.

In the first modification of one or more embodiments of the third example, a neutral density filter 80 is configured to coarsely adjust transmittance (dimming ratio) in seven increments of 1/α⁰ (=1), 1/α¹, 1/α², 1/α³, 1/α⁴, 1/α⁵, and 1/α⁶. Furthermore, as illustrated in FIG. 10, filters 801a to 803a of the first neutral density filter 80a and filters 801b to 803b of the second neutral density filter 80b have respectively a transmittance expressed by an integer power of 1/α. The filters 801a to 803a of the first neutral density filter 80a have respectively a transmittance of 1/α⁰ (none), 1/α¹ (ND1), and 1/α² (ND2). Furthermore, the filters 801b to 803b of the second neutral density filter 80b have respectively a transmittance of 1/α⁰ (none), 1/α² (ND2), and 1/α⁴ (ND4). The filter 801a and the filter 801b are either made from a material with a transmittance of 1 or are in a state of not having the material (in an empty state).

Other configurations of the first modification of one or more embodiments of the third example may be the same as the previously described one or more embodiments of the third example.

The embodiments herein disclosed are examples on all points and should be considered as not restrictive. The scope of the present invention is indicated by the scope of the claims and not by the descriptions of the embodiments described above and furthermore comprises all equivalent meanings of the scope of the claims and all modifications within the scope of the claims.

For example, in one or more embodiments described above, an example is given in which the present invention is applied to a head-up display device, but the present invention is not limited to this. In the present invention, the present invention may be applied to a projection device other than a head-up display device.

Furthermore, in one or more embodiments described above, an example is given in which an image is projected on a windshield of a car as a projection area, but the present invention is not limited to this. In the present invention, the image may be projected on a projection area such as a screen.

Furthermore, in one or more embodiments described above, an example is given in which two neutral density filters, a first neutral density filter and a second neutral density filter, were combined to change transmittance of a laser light, but the present invention is not limited to this. In the present invention, one neutral density filter may change transmittance of the laser light, or three or more neutral density filters may be combined to change transmittance of the laser light.

Furthermore, in one or more embodiments described above, examples are given of configurations in which the neutral density filter coarsely adjusts transmittance (dimming ratio) in six increments, five increments, and seven increments, but the present invention is not limited to this. In the present invention, the neutral density filter may coarsely adjust transmittance in four increments or less or in eight increments or more.

Furthermore, in one or more embodiments of a first example described above, an example is given of a configuration in which transmittance is changed from 1 to about 1/1200 by combining the plurality of filters of the first neutral density filter and the plurality of filters of the second neutral density filter, but the present invention is not limited to this. In the present invention, a configuration that changes transmittance from 1 to about 1/1200 is not necessary if a configuration that changes transmittance from 1 to 1/1000 or less by combining the plurality of filters of the first neutral density filter and the plurality of filters of the second neutral density filter is provided.

Furthermore, in one or more embodiments described above, an example is given of a configuration in which brightness of the projected image is adjusted in a range of dimming ratio 1 to 1/5000, but the present invention is not limited to this. In the present invention, brightness of the projected image may be adjusted in a range other than dimming ratio 1 to 1/5000.

### [Explanation of Reference Numerals]

1 Head-up display device (*e.g*., projection device)
2 Windshield (*e.g*., display panel)
12 Laser controller (*e.g*., laser output controller)
15 Stepping motor (*e.g*., driver)
18a Red LD (*e.g*., laser light generator)
18b Green LD (*e.g*., laser light generator)
18c Blue LD (*e.g*., laser light generator)
20, 30, 40, 50, 60, 70, 80 Neutral density filter
20a, 30a, 40a, 50a, 60a, 70a, 80a First neutral density filter
20b, 30b, 40b, 50b, 60b, 70b, 80b Second neutral density filter
21 Projector
21a MEMS mirror (*e.g*., scanner)
201a, 202a, 203a, 301a, 302a, 303a, 401a, 402a, 403a, 01a, 502a, 503a, 601a, 602a, 603a, 701 a, 702a, 703a, 801 a, 802a, 803a Filter of the first neutral density filter
201b, 202b, 203b, 301b, 302b, 303b, 401b, 402b, 501b, 502b, 601b, 602b, 603b, 701b, 702b, 703b, 801b, 802b, 803b Filter of the second neutral density filter

## Claims

1. A projection device (1), comprising:
a laser light generator (18a, 18b, 18c) that outputs a laser light based on input image signals;
a projector (21) comprising a scanner (21a) that scans the laser light irradiated from the laser light generator (18a, 18b, 18c) and projects an image on a projection area;
a neutral density filter (20) that coarsely adjusts brightness of the projected image by incrementally changing transmittance of the laser light irradiated from the laser light generator (18a, 18b, 18c); and
a laser output controller (12) that finely adjusts the brightness of the projected image by changing light intensity of the laser light by performing output adjustment of the laser light irradiated from the laser light generator (18a, 18b, 18c).

2. The projection device (1) according to claim 1, wherein the laser output controller (12) finely adjusts the brightness of the image at a same time the neutral density filter (20) coarsely adjusts the brightness of the image.

3. The projection device (1) according to claim 1 or 2, wherein the neutral density filter (20) is configured to change the transmittance of the laser light by a predetermined number of increments.

4. The projection device (1) according to any one of claims 1-3, wherein the laser output controller (12) is configured to change the light intensity of the laser light in a range of 1 to 1/α.

5. The projection device (1) according to any one of claims 2-4, wherein
the laser output controller (12) is configured to finely adjust the light intensity of the laser light down to 1/α, and
the neutral density filter (20) is configured to incrementally change transmittance 1/α times at a time.

6. The projection device (1) according to any one of claims 1-5, wherein the neutral density filter (20) comprises:
a first neutral density filter (20a); and
a second neutral density filter (20b) disposed in an optical path direction of the laser light relative to the first neutral density filter (20a),
wherein transmittance is configured to change incrementally by combining the first neutral density filter (20a) and the second neutral density filter (20b).

7. The projection device (1) according to claim 6, wherein
the first neutral density filter (20a) has incremental transmittance and comprises a plurality of filters (201a, 202a, 203a) arranged in a direction that intersects the optical path direction of the laser light,
the second neutral density filter (20b) has incremental transmittance and comprises a plurality of filters (201b, 202b, 203b) arranged in the direction that intersects the optical path direction of the laser light, and
the neutral density filter (20) further comprises a driver (15) that moves the first neutral density filter (20a) and the second neutral density filter (20b) in the direction that intersects the optical path direction of the laser light to change a combination of the plurality of filters (201a, 202a, 203a) of the first neutral density filter (20a) and the plurality of filters (201b, 202b, 203b) of the second neutral density filter (20b).

8. The projection device (1) according to claim 7, wherein
the first neutral density filter (20a) comprises a plurality of types of filters with transmittance expressed by an integer power of 1/α,
the second neutral density filter (20b) comprises a plurality of types of filters with transmittance expressed by an integer power of 1/α, and
the neutral density filter (20) is configured to change transmittance incrementally 1/α times at a time in (N+1) increments from 1 to the Nth power of 1/α, by combining the plurality of filters (201a, 202a, 203a) of the first neutral density filter (20a) and the plurality of filters (201b, 202b, 203b) of the second neutral density filter (20b).

9. The projection device (1) according to any one of claims 6 to 8, wherein the neutral density filter (20) is configured to change transmittance incrementally in increments of between five and seven from 1 to 1/1000 or less by combining one of the plurality of filters (201a, 202a, 203a) of the first neutral density filter (20a) and one of the plurality of filters (201b, 202b, 203b) of the second neutral density filter (20b).

10. The projection device (1) according to any one of claims 1-9, wherein the projection device comprises a head-up display device (1).

11. A projection device size control method comprising:
outputting a laser light based on input image signals;
scanning the laser light and projecting an image on a projection area;
coarsely adjusting brightness of the projected image by incrementally changing transmittance of the laser light; and
finely adjusting brightness of the projected image by changing light intensity of the laser light by performing output adjustment of the laser light.

12. The projection method according to claim 11, wherein
the finely adjusting comprises changing the light intensity of the laser light down to 1/α,
the coarsely adjusting comprises incrementally changing transmittance 1/ α times at a time, and
the finely adjusting and the coarsely adjusting are performed simultaneously.
